# EUROPÄISCHE PATENTSCHRIFT

(11) **EP 0 846 490 B1**
(45) Veröffentlichungstag und Bekanntmachung des Hinweises auf die Patenterteilung: **19.01.2005**
(21) Anmeldenummer: 97121062.0
(22) Anmeldetag: 01.12.1997
(51) Int. Cl.: B01D 53/64

(54) **Verfahren zum Entfernen von Quecksilber aus einem quecksilberhaltigen Abgas**
Process for the removal of mercury from a mercury containing gas
Procédé pour éliminer le mercure d'un gaz contenant du mercure

(30) Priorität: 02.12.1996 DE 19649927
(43) Veröffentlichungstag der Anmeldung: 10.06.1998
(73) Patentinhaber: FISIA Babcock Environment GmbH, 51642 Gummersbach (DE)
(72) Erfinder: Rosenthal, Jürgen, 53797 Lohmar (DE); Schüttenhelm, Wolfgang, Dr., 51674 Wiehl (DE); Klein, Marton, Dr., 51643 Gummersbach (DE); Heidrich, Rüdiger, Dr., 51643 Gummersbach (DE); Nikolai, Ulrich, 86558 Hohenwart (DE); Soldner, Uwe, 85077 Manching (DE)
(74) Vertreter: Lüdtke, Frank

(56) Entgegenhaltungen:
- EP-A- 0 506 132
- EP-A- 0 709 128
- WO-A-89/08493
- WO-A-94/22563
- US-A- 5 034 203

## Beschreibung

Die Erfindung betrifft ein Verfahren der im Oberbegriff des Anspruches 1 genannten Art.

Ein solches Verfahren ist aus der DE 44 37 781 A1 bekannt, bei dem eine wässrige Natriumtetrasulfidlösung unmittelbar nach einer teilweisen Entstaubung des Abgases in einem Elektrofilter dem Abgas zugeführt wird, d. h. bei einer relativ hohen Temperatur, und danach das sich durch Abscheiden von ionischem Quecksilber Hg²⁺ und Hg⁺ und von metallischem Quecksilber Hg⁺ bildende Quecksilbersulfid in einem Gewebefilter abgeschieden wird. Danach erfolgt eine Auswaschung saurer gasförmiger Schadkomponenten wie HCl und SO₂. Bei dem bekannten Verfahren wird die Natriumtetrasulfidlösung mit Raumtemperatur mit Hilfe von kalter Zerstäuberluft eingesprüht. Für die Abscheidung des Quecksilbers sind relativ große Mengen an Natriumtetrasulfid erforderlich. Es ist eine relativ lange Kontaktstrecke dafür erforderlich, da das Natriumtetrasulfid im kalten Zustand lange Verweilzeiten benötigt.

In der WO 94/22563 ist ein Verfahren zur Entfernung von Quecksilber aus einem durch Kohlevergasung erzeugten Synthesegas beschrieben. Bei diesem Verfahren wird eine Polysulfidlösung alleine oder zusammen mit einer Kühl- oder Waschflüssigkeit in das zuvor abgekühlte und von Feststoffen befreite Gas eingesprüht. Die Temperatur des Gases in der Kontaktzone soll maximal 93 °C betragen.

Es ist die Aufgabe der vorliegenden Erfindung, ein gattungsgemäßes Verfahren anzugeben, bei dem die Quecksilberabscheidung mittels der eingebrachten Alkalisulfidlösung, insbesondere Natriumsulfidlösung, verbessert wird.

Diese Aufgabe wird dadurch gelöst, daß die Alkalisulfidlösung unter gleichzeitiger Zufuhr von Wärme in das Abgas eingebracht wird.

Als Alkalisulfidlösungen können vorzugsweise Natriumsulfid- und Kaliumsulfidlösungen eingesetzt werden.

In der Beschreibung und in den Ansprüchen wird unter "Natriumsulfidlösung" eine Lösung verstanden, die Natriummonosulfid und/oder Natriumpolysulfid enthält. Unter einer bevorzugt einzusetzenden "Natriumtetrasulfidlösung" wird eine Lösung verstanden, die im wesentlichen Natriumtetrasulfid enthält, jedoch aus technischen Gründen auch noch Anteile anderer Polysulfide und gegebenenfalls Monosulfid enthält.

Es wurde überraschend gefunden, daß durch Wärmezufuhr beim Einbringen die Abscheidewirksamkeit des Alkalisulfids, insbesondere des Natriumsulfids, bzw. des Natriumtetrasulfids, gegenüber ionischem Quecksilber sehr effektiv ist, und dies auch noch bei geringeren Rauchgastemperaturen, als sie gegenüber dem bekannten Verfahren am Ausgang des Elektrofilters herrschen. Bei Einsatz von Natriumtetrasulfid wird auch die Wirksamkeit gegenüber metallischem Quecksilber verbessert. Auch kann bei Rauchgasen mit hohen Temperaturen die für die Abscheidung erforderliche Kontaktstrecke verkürzt sein.

Vorzugsweise wird die Alkalisulfidlösung mittels eines Hilfsfluids eingebracht, das vor dem Zusammenbringen mit der Alkalisulfidlösung erwärmt wird.

Es kann davon ausgegangen werden, daß durch die Temperaturerhöhung in der Alkalisulfidlösung für relativ kurze Zeit ein Aufschluß der Alkalisulfidmoleküle zu Quecksilber absorbierenden Substanzen, beispielsweise im Falle von Natriumsulfid zu den Reaktionskomponenten Na₂S, H₂S und S, beschleunigt wird. Vorzugsweise erfolgt die Temperaturerhöhung in den Bereich von 100 - 200 °C, weiter bevorzugt 100 - 120 °C.

Vorzugsweise wird die Alkalisulfidlösung zusammen mit heißem Dampf als Hilfsfluidmedium in das Abgas eingebracht, z. B. durch Einsatz einer Dampfstrahlpumpe für das Einbringen der Alkalisulfidlösung.

Es ist jedoch auch denkbar, daß die Alkalisulfidlösung zusammen mit heißer Luft und/oder heißem Rauchgas in das Abgas eingebracht wird.

Die Temperatur des Abgases bei Einbringen der Alkalisulfidlösung sollte unter 300 °C, zweckmäßigerweise unter 250 °C und weiter bevorzugt unter 150 °C liegen.

Weiterhin wurde festgestellt, daß die Effektivität verbessert wird, wenn die Alkalisulfidlösung in ein Abgas mit erhöhtem Feuchtigkeitsgehalt bei einer Temperatur unter 150 °C, weiter bevorzugt bei einer Temperatur von unter 100 °C in ein feuchtigkeitsgesättigtes Abgas eingebracht wird; gegebenenfalls wird der erforderliche Feuchtigkeitsgehalt durch zusätzliche Zugabe von Wasser erreicht, falls der Wasserdampfgehalt des Abgases nicht ausreicht.

Bei niedrigeren Rauchgastemperaturen ist es sinnvoll, ein auch als Treibgas wirkendes Hilfsmedium mit höherer Temperatur einzusetzen. Der Einsatz von Dampf als Hilfsmedium wird bevorzugt, da er gegenüber Luft und Rauchgas einen höheren Wärmeinhalt besitzt. Weiterhin ist festgestellt worden, daß bei Einsatz von Dampf die Bildung der Reaktionskomponenten gegenüber dem Einsatz von Luft als Hilfsmedium im hohen Ausmaß verbessert wird. Die Abscheidung von Quecksilber unter Einsatz von Dampf als Hilfsfluidmedium kann auch erreicht werden, ohne daß saure Schadgaskomponenten im Abgas vorhanden sein müssen.

Etwaige vorhandene saure Schadgaskomponenten können daher vor oder nach der Zugabe der Alkalisulfidlösung und nachfolgender Staubabscheidung aus dem Abgas entfernt werden, vorzugsweise durch Waschen. Wenn dieses Waschen vor der Zugabe der Alkalisulfidlösung erfolgt, wird die bevorzugte Feuchtigkeitssättigung sofort erreicht.

Für die Verfahrensführung wird weiterhin bevorzugt, daß vor dem Einbringen oder zusammen mit der Alkalisulfidlösung ein Oxidationsmittel, vorzugsweise H₂O_{2,} und/oder ein Sorptionsmittel, vorzugsweise Aktivkoks, zugesetzt werden.

Bei Vorliegen eines Abgases ohne saure Schadgaskomponenten könnte die Zuführung eines sauren Gases wie HCl sinnvoll sein, um die Abscheidung weiter zu verbessern.

Natürlich ist es auch zweckmäßig, das Abgas vor dem Einbringen der Alkalisulfidlösung zu entstauben. Der Einsatz einer Natriumsulfidlösung wird bevorzugt, insbesondere der Einsatz einer Natriumtetrasulfidlösung.

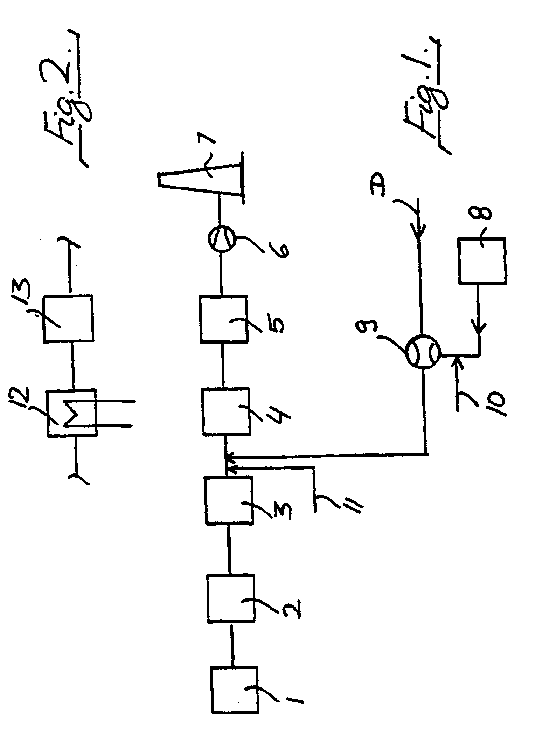

Die Erfindung soll nun anhand der beigefügten Fig. 1 und 2 näher erläutert werden. Es zeigt:
- Fig. 1: eine Verfahrensführung mit Feinstaubabscheidung in einem Naßelektrofilter und
- Fig. 2: eine Verfahrensführung mit Feinstaubabscheidung in einem Gewebefilter.

In einer Müllverbrennungsanlage 1 werden Abfälle bei ca. 900 °C verbrannt und mit Hilfe von nicht gesondert dargestellten Heizflächen auf ca. 300 °C abgekühlt. In einem nachgeschalteten Elektrofilter 2 werden die Rauchgase grob entstaubt, ohne daß es zu einer wesentlichen Temperaturabsenkung kommt. In einem nachgeschalteten Wäscher 3 mit einer sauren und einer alkalischen Waschstufe werden saure Schadgaskomponenten S0₂, HCl, HF usw. sowie Schwermetalle u. a. und zum Teil auch Hg²⁺ ausgewaschen. In dem Wäscher wird jedoch keine ausreichende Entfernung von Quecksilber erreicht, insbesondere von metallischem Quecksilber Hg^{o.}.

Das gereinigte Gas verläßt den Wäscher 3 feuchtigkeitsgesättigt und gekühlt auf eine Temperatur von ca. 65 °C und wird in einem nachgeschalteten Gaskühler 4 auf 55 °C abgekühlt, wobei gezielt eine Kondensation von Wassertröpfchen auf dem HgS - haltigen Feinstaub ausgelöst wird. Der Feinstaub wird in Form einer Suspension in einem dem Gaskühler 4 nachgeschalteten Naßfilter 5, vorzugsweise Naßelektrofilter, abgeschieden und über einen Saugzug 6 einem Kamin 7 zugeleitet.

### Beispiel

In dem Verbindungskanal zwischen Wäscher 3 und Gaskühler 4 einer Großanlage wird eine 10%ige Na₂S₄-Lösung in Wasser aus einem Vorratsbehälter 8 mittels einer Dampfstrahlpumpe 9 mit Dampf D von P₀ = 4 bar und T_{Dampf} = 220 °C eingedüst. Hierdurch wird eine kurzzeitige Erhitzung der Na₂S₄-Lösung auf Temperaturen über 100 °C bis max. 200 °C bewirkt. Das feuchtigkeitsgesättigte Rauchgas hat einen Wasserdampfgehalt von ca. 200 g H₂O/kg Rauchgas tr. und einen Sauerstoffgehalt von ca. 11 - 12 Vol.-% im Rauchgas tr. und einen Reststaubgehalt von ca. 33 mg/m³ i.N. Das Zudosieren einer 10%igen Natriumtetrasulfidlösung zum Dampf entspricht dem Einbringen von 60 - 150 mg reines Na₂S₄/m³ i.N. trockenem Rauchgas. Das Rauchgasvolumen lag im Mittel bei 70.000 m³ i.N./h. Es wurde ein Abscheidegrad von 90 - 95 % erreicht.
Bei Vergleich der Verfahrensführung aus der Großanlage im Labormaßstab mit der bekannten Verfahrensführung unter Einsatz kalter Luft wurden mit Natriumtetrasulfidlösung Abscheidegrade von metallischem Quecksilber von 5 bis 10 % mit kalter Luft im Vergleich von 60 % mit Dampf als Hilfsfluid erreicht. Der Abscheidegrad war somit um eine Größenordnung besser. Die Temperatur des synthetischen Abgases aus N₂, O₂, H₂O und Hg betrug 80°C.

Zusammen mit der Natriumtetrasulfidlösung 8 wird der Dampfstrahlpumpe vorzugsweise eine Suspension 10 eines kohlenstoffhaltigen Sorbtionsmittels, wie Aktivkoks, zugeführt. Diese trägt zum einen ebenfalls zum Entfernen von Schwermetallen bei, zum anderen verhindert sie das Auftreten von Schwefelblüte im Waschwasser des Gaskühlers 5, insbesondere aber im Abgang des Naßelektrofilters 5.

Anstelle eines kohlenstoffhaltigen Sorbtionsmittels können auch andere Sorbtionsmittel mit derselben Funktion des Angebots einer relativ großen Oberfläche, wie z. B. Al₂O₃ und Zeolithe eingesetzt werden.

Weiterhin kann in der Nähe der Eindüsung der Natriumtetrasulfidlösung in den Kanal zwischen Wäscher 3 und Gaskühler 4 ein Oxidationsmittel 11, vorzugsweise H₂O_{2,} zudosiert werden. Anstelle von H₂O₂ könnten auch andere Oxidationsmittel wie O₃ und NaOCl eingesetzt werden.

In der Figur 2 ist eine Anlage zur Durchführung des Verfahrens dargestellt, bei der das Gas nach Zufuhr der Natriumtetrasulfidlösung nicht einem Gaskühler 4 und einem nachgeschalteten Naßelektrofilter 5 zugeführt wird, sondern das Gas nach einer Temperaturanhebung in einem dem Wäscher 3 nachgeschalteten Wärmetauscher 12 erwärmt und über einen schichtbildenden Gewebefilter 13 geführt wird.

Das Verfahren wurde im Zusammenhang mit einer Müllverbrennungsanlage beschrieben. Es kann auch zur Behandlung anderer Hg-haltiger Abgase aus z. B. chemischen Herstellungsprozessen, von Rauchgasen aus mit fossilen Brennstoffen gefeuerten Kraftwerken, Rauchgasen aus Klärschlammverbrennungsanlagen oder Abgasen aus Sinteranlagen der Metallurgie eingesetzt werden.

## Patentansprüche

1. Verfahren zum Entfernen von Quecksilber aus einem quecksilberhaltigen Staub und gegebenenfalls, weitere Schwermetalle und weitere gasförmige Schadgaskomponenten enthaltenden Abgas, dessen Temperatur under 300°C liegt, insbesondere Abgas einer Müllverbrennungsanlage, bei dem Quecksilber mit einer Alkalisulfidlösung in Quecksilbersulfid überführt und das Quecksilbersulfid über einen Staubabscheider abgeschieden wird, **dadurch gekennzeichnet, daß** die Alkalisulfidlösung unter gleichzeitiger Zufuhr von Wärme in das Abgas eingebracht wird.

2. Verfahren nach Anspruch 1,
**dadurch gekennzeichnet, daß** die Alkalisulfidlösung mittels eines Hilfsfluids eingebracht wird, das vor dem Zusammenbringen mit der Alkalisulfidlösung erwärmt wird.

3. Verfahren nach Anspruch 1 oder 2,
**dadurch gekennzeichnet, daß** die Alkalisulfidlösung zusammen mit heißem Dampf als Hilfsfluid in das Abgas eingebracht wird.

4. Verfahren nach Anspruch 1 oder 2, **dadurch gekennzeichnet, daß** die Alkalisulfidlösung zusammen mit heißer Luft und/oder heißem Rauchgas in das Abgas eingebracht wird.

5. Verfahren nach mindestens einem der Ansprüche 1 bis 4,
**dadurch gekennzeichnet, daß** die Alkalisulfidlösung auf eine Temperatur in dem Bereich von 100 - 200 °C, vorzugsweise 100 - 120 °C, gebracht wird.

6. Verfahren nach mindestens einem der Ansprüche 1 bis 5,
**dadurch gekennzeichnet, daß** die Temperatur des Abgases bei Einbringen der Alkalisulfidlösung unter 250 °C und bevorzugt unter 150 °C liegt.

7. Verfahren nach mindestens einem der Ansprüche 1 bis 6,
**dadurch gekennzeichnet, daß** die Alkalisulfidlösung in ein Abgas mit erhöhtem Feuchtigkeitsgehalt bei einer Temperatur unter 150 °C, weiter bevorzugt bei einer Temperatur unter 100 °C in ein feuchtigkeitsgesättigtes Abgas eingebracht wird.

8. Verfahren nach mindestens einem der Ansprüche 1 bis 7,
**dadurch gekennzeichnet, daß** saure Schadgaskomponenten vor oder nach der Zugabe der Alkalisulfidlösung und nachfolgender Staubabscheidung aus dem Abgas entfernt werden.

9. Verfahren nach mindestens einem der Ansprüche 1 bis 8,
**dadurch gekennzeichnet, daß** vor dem Einbringen oder zusammen mit der Alkalisulfidlösung ein Oxidationsmittel, vorzugsweise H₂O₂ und/oder ein Sorptionsmittel, vorzugsweise Aktivkoks, zugesetzt werden.

10. Verfahren nach mindestens einem der Ansprüche 1 bis 9,
**dadurch gekennzeichnet, daß** als Alkalisulfidlösung eine Natriumsulfidlösung eingesetzt wird.

11. Verfahren nach mindestens der Ansprüche 1 bis 10, **dadurch gekennzeichnet, daß** als Alkalisulfidlösung eine Natriumtetrasulfidlösung eingesetzt wird.

## Claims

1. Method for removing mercury from dust containing mercury and where applicable, other heavy metals and waste gas containing other gaseous constituents of harmful gas, the temperature of which is below 300° C, more especially waste gas of an incinerating plant, with which method mercury is converted with an alkali sulphide solution into mercury sulphide and the mercury sulphide is separated-off via a dust separator, **characterised in that** the alkali sulphide solution is introduced into the waste gas at the same time as heat.

2. Method according to claim 1, **characterised in that** the alkali sulphide solution is introduced by means of an auxiliary fluid, which is heated before being brought into contact with the alkali sulphide solution.

3. Method according to claim 1 or 2, **characterised in that** the alkali sulphide solution together with hot steam as the auxiliary fluid is introduced into the waste gas.

4. Method according to claim 1 or 2, **characterised in that** the alkali sulphide solution together hot air and/or hot flue gas is introduced into the waste gas.

5. Method according to at least one of claims 1 to 4, **characterised in that** the alkali sulphide solution is brought to a temperature in the range of between 100 and 200°C, preferably between 100 and 120°C.

6. Method according to at least one of the claims 1 to 5, **characterised in that** the temperature of the waste gas when the alkali sulphide solution is introduced is less than 250°C and is preferably less than 150°C.

7. Method according to at least one of claims 1 to 6, **characterised in that** the alkali sulphide solution is introduced into a waste gas with an increased moisture content at a temperature of less than 150°C, more preferably at a temperature of less than 100°C into a moisture-saturated waste gas.

8. Method according to at least one of claims 1 to 7, **characterised in that** acidic constituents of harmful gas are removed from the waste gas before or after the addition of the alkali sulphide solution and the subsequent dust separation.

9. Method according to at least one of the claims 1 to 8, **characterised in that** before the introduction of the alkali sulphide solution or together with the alkali sulphide solution, an oxidising means, preferably H₂ O₂ and/or an adsorbing means, preferably active coke, is added.

10. Method according to at least one of claims 1 to 9, **characterised in that** a sodium sulphide solution is used as the alkali sulphide solution.

11. Method according to at least one of the claims 1 to 10, **characterised in that** a sodium tetrasulphide solution is used as the alkali sulphide solution.

## Revendications

1. Procédé pour éliminer le mercure de poussières contenant du mercure et le cas échéant d'effluents gazeux, dont la température est inférieure à 300°C, contenant d'autres métaux lourds et d'autres composants de gaz polluants à l'état gazeux, en particulier des effluents gazeux provenant d'un incinérateur de déchets, dans lequel le mercure est transformé avec une solution de sulfure alcalin en sulfure de mercure et le sulfure de mercure est séparé par un séparateur de poussières, **caractérisé en ce que** la solution de sulfure alcalin est introduite dans les effluents gazeux avec un apport simultané de chaleur.

2. Procédé selon la revendication 1,
**caractérisé en ce que** la solution de sulfure alcalin est introduite à l'aide d'un fluide auxiliaire, qui est chauffé avant la mise en contact avec la solution de sulfure alcalin.

3. Procédé selon la revendication 1 ou 2,
**caractérisé en ce que** la solution de sulfure alcalin est introduite dans les effluents gazeux conjointement à de la vapeur chaude comme fluide auxiliaire.

4. Procédé selon la revendication 1 ou 2,
**caractérisé en ce que** la solution de sulfure alcalin est introduite dans les effluents gazeux avec de l'air chaud et/ou des fumées chaudes.

5. Procédé selon l'une au moins des revendications 1 à 4,
**caractérisé en ce que** la solution de sulfure alcalin est portée à une température dans une plage de 100 à 200°C, de préférence de 100 à 120°C.

6. Procédé selon l'une au moins des revendications 1 à 5,
**caractérisé en ce que** la température des effluents gazeux, lors de l'introduction de la solution de sulfure alcalin est inférieure à 250°C de préférence inférieure à 150°C.

7. Procédé selon l'une au moins des revendications 1 à 6,
**caractérisé en ce que** la solution de sulfure alcalin est introduite dans des effluents gazeux à un taux d'humidité accru à une température inférieure à 150°C, de manière encore préférée à une température inférieure à 100°C dans des effluents gazeux saturés d'humidité.

8. Procédé selon l'une au moins des revendications 1 à 7,
**caractérisé en ce que** des composants de gaz polluants acides sont éliminés des effluents gazeux avant ou après l'introduction de la solution de sulfure alcalin et la séparation de poussière consécutive.

9. Procédé selon l'une au moins des revendications 1 à 8,
**caractérisé en ce qu'**un agent oxydant de préférence du H₂O₂, et/ou un sorbant de préférence du coke actif, sont ajoutés avant l'introduction ou conjointement à la solution de sulfure alcalin.

10. Procédé selon l'une au moins des revendications 1 à 9,
**caractérisé en ce qu'**une solution de sulfure de sodium est employée comme solution de sulfure alcalin.

11. Procédé selon l'une au moins des revendications 1 à 10,
**caractérisé en ce qu'**une solution de tétrasulfure de sodium est employée comme solution de sulfure alcalin.
